# EUROPEAN PATENT SPECIFICATION

(11) **EP 1 438 362 B1**
(45) Date of publication and mention of the grant of the patent: **27.06.2007**
(21) Application number: 02757576.0
(22) Date of filing: 05.09.2002
(51) Int. Cl.: C09D 153/02, C08K 5/3492, C09J 7/02

(54) **POLYOLEFIN PRESSURE SENSITIVE ADHESIVE TAPE WITH AN IMPROVED PRIMING LAYER**
POLYOLEFINHAFTKLEBEBAND MIT EINER VERBESSERTEN PRIMERSCHICHT
BANDE ADHESIVE SENSIBLE A LA PRESSION CONSTITUEE DE POLYOLEFINE PRESENTANT UNE COUCHE D'APPRET AMELIOREE

(30) Priority: 22.10.2001 US 14625
(43) Date of publication of application: 21.07.2004
(73) Proprietor: 3M Innovative Properties Company, St. Paul, MN 55133-3427 (US)
(72) Inventor: HAWKINS, Stephen, J., Saint Paul, MN 55133-3427 (US); POCIUS, Alphonsus, V., Saint Paul, MN 55133-3427 (US); PETERSON, James, R., Saint Paul, MN 55133-3427 (US); ZHOU, Zhiming, Saint Paul, MN 55133-3427 (US)
(74) Representative: Vossius & Partner
(86) International application number: PCT/US2002/028101
(87) International publication number: WO 2003/035779

(56) References cited:
- US-A- 3 970 771
- US-A- 5 846 653
- US-A- 5 993 900
- US-A- 6 048 610

## Description

### Field of the Invention

This invention relates to a primer that improves adhesion of a pressure sensitive adhesive to a tape backing.

### Background of the Invention

In the field of pressure sensitive adhesives, predictable control over mechanical and process properties is desirable so that such adhesives can be tailored for specific, highly demanding end use applications such as packaging, medical, and masking tapes. These applications require a proper balance of properties, and this balance changes with each end use.

Natural and synthetic rubbers were among the earliest polymers to provide a reasonable balance of the properties required for satisfactory pressure sensitive adhesive performance. However, those skilled in the art recognized that ethylenically unsaturated groups had to be eliminated from the polymer backbone to improve the oxidative stability of the adhesives. This became possible with the discovery of the catalytic activity of Ziegler-Natta (ZN) coordination systems toward α-olefin monomers and the subsequent production of high molecular weight polymers. Homopolymers of the C₆ to C₁₀ α-olefins were naturally tacky, had low toxicity, aged well, and were environmentally stable, chemically inert, resistant to plasticizer migration, and relatively inexpensive. These characteristics made them good candidates for pressure sensitive adhesive applications. However, their poor cohesive strength meant that they lacked the shear adhesion necessary for high performance pressure sensitive adhesives.

Poly-α-olefins adhesive compositions comprising mixtures of α-olefin polymers and copolymers are known. See, e.g., U.S. Pat. Nos. 3,542,717 and 3,635,755. However, such compositions proved not to have sufficient shear adhesion at elevated temperatures to be suitable for demanding applications such as, for example, masking tapes. This high temperature shear problem was solved in U.S. Pat. No. 5,112,882. That patent describes a radiation curable, α-olefin homo- or copolymer pressure sensitive adhesive composition based primarily on α-olefins. That composition provides adhesive films with a superior balance of peel and shear performance.

Poly-α-olefin pressure sensitive adhesives adhere in a similar fashion to many surfaces, including low energy surfaces, and have proven to be good at not damaging the surfaces of sensitive surfaces (e.g., anodized aluminum as is used in certain aircraft parts). However, poly-α-olefin pressure sensitive adhesives have not been widely used for certain high performance applications because of adhesive transfer to the surface. This adhesive transfer is an anchorage failure rather than a cohesive failure of the adhesive (i.e., the adhesive does not remain bonded to the backing but instead transfers en masse to the protected surface when the tape is removed). This transfer most often occurs during removal of the pressure sensitive adhesive from an adherend at a high temperature (e.g., 165 °C or greater), from an adherend that has been heated to a high temperature and then allowed to cool, and/or under some very low rate peel conditions.

One of the most stringent applications for any pressure sensitive adhesive is that of a high temperature masking tape, often used in industry during painting and detailing processes. Such masking tapes must protect surfaces during bake cycles of up to an hour at temperatures between about 200 °C and about 220 °C, generally about 215 °C, yet remove cleanly from the surface thereafter.

In addition to high temperature industrial masking applications, masking of aircraft during painting procedures has become quite challenging. Tapes presently used to mask aircraft during painting have proven to be ineffective in the presence of high boiling solvents used in low-volatile organic compound (VOC) paints. Historically, paints containing VOCs such as toluene, heptane, mineral spirits, and methyl ethyl ketone, have been used during various steps of the aircraft painting process. However, governmental entities have begun to heavily regulate the use of such VOCs, making questionable the continued use of paints containing them. A masking tape able to withstand prolonged exposure to the high boiling solvents presently being used in paint formulations has yet to be demonstrated.

A poly-α-olefin pressure sensitive adhesive tape construction in which the adhesive does not transfer to the protected surface is highly desirable. Additional benefits would be achieved if such a tape construction could be used for masking applications where low-VOC solvents are to be used.

### Summary of the Invention

The present invention is directed to a primer composition. The primer composition comprises a maleated thermoplastic elastomer, a non-halogenated polyolefin, and a resin. In some embodiments, the primer comprises a crosslinking agent, for example 2,4-bis(trichloromethyl)-6-4'-methoxyphenyl-sym-triazine. In other embodiments, the primer comprises an epoxy.

The invention is also directed to a tape comprising a substrate, a primer coated on at least one surface of the substrate, the primer comprising a maleated rubber, a non-halogenated polyolefin and a resin, and a pressure sensitive adhesive coated on the primer.

### Detailed Description of the Invention

### Pressure Sensitive Adhesive

Any suitable pressure sensitive adhesive composition can be used for a tape article of this invention. The pressure sensitive adhesive component of the tape article can be any material that has pressure sensitive adhesive properties. Pressure sensitive adhesives are well known to one of ordinary skill in the art to possess properties including the following: (1) aggressive and permanent tack, (2) adherence to an adherend with no more than finger pressure, (3) sufficient ability to hold onto an adherend, and (4) sufficient cohesive strength to be removed cleanly from the adherend. Furthermore, the pressure sensitive adhesive component can be a single pressure sensitive adhesive or the pressure sensitive adhesive can be a combination of two or more pressure sensitive adhesives.

Pressure sensitive adhesives useful in the present invention include, for example, those based on natural rubbers, synthetic rubbers, styrene block copolymers, polyvinyl ethers, poly (meth)acrylates (including both acrylates and methacrylates), polyolefins, and silicones.

In certain embodiments, the pressure sensitive adhesive is a polyolefin based pressure sensitive adhesive. In specific embodiments, the pressure sensitive adhesive is a poly-α-olefin pressure sensitive adhesive. The poly-α-olefin comprises one or more monomer units derived from an α-olefin monomer that is a liquid at standard temperature and pressure. The monomer may be a C₅ - C₃₀ α-olefin, for example a C₆ - C₂₀ α-olefin. In specific embodiments, the monomer is a C₆ - C₁₂ α-olefin. Such monomers optionally can be substituted with conventional substituents (i.e., those that do not interfere with the polymerization of these monomers or with the desired properties of the polymer produced therefrom). Such an olefin can either be linear or branched (i.e., comprising one or more side chains). Common examples include 1-butene, 1-pentene, 1-hexene, 1-heptene, 1-octene, 1-nonene, 1-decene, 1-undecene, 1-dodecene, 1-hexadecene, 1-octadecene, and 4-methyl-1-pentene. Specific embodiments utilize α-olefin monomers of 1-hexene or 1-octene. Blends of one or more of these monomers plus a lower (i.e., C₂ - C₄) 1-alkene are also within the scope of the present invention. A full description of specific α-olefin polymers can be found in U.S. Pat. No. 5,112,882.

The α-olefin polymer can be a homopolymer or a random co, ter, or tetra polymer. It can also comprise blocks of homopoly (α-olefin) interspersed with monomer units derived from various other copolymerizable monomers. Examples of potentially useful copolymerizable monomers include polyenes such as, for example, the C₆ - C₁₄ α,ω-dienes, conjugated dienes, trienes, terpenes, and alkenyl-norbornenes.

The above-described monomers can be polymerized, either in bulk or in one or more inert solvents, in the presence of a catalyst system over a wide range of temperatures, e.g., about 0° to about 140° C, such as about 30° to about 90° C. The amount of catalyst used may be in the range of about 0.1 to about 5 g per kg of monomer. Useful catalyst systems include standard ZN catalyst systems, ZN catalyst systems where the transition metal compound is supported (e.g., on a MgCl₂ powder), and Kaminsky-Ewen catalyst systems. All three catalyst systems are well known by those familiar with α-olefin polymerizations. Because the particular catalyst system used does not affect either the primer composition or the overall tape construction of the present invention, they are not discussed in detail here.

In certain embodiments, the polymer has a glass transition temperature in the range of about -70° to about 0° C, generally in the range of about -60° to about -20° C; an inherent viscosity in the range of 0.4 to 9.0 dUg, for example 0.5 to 6.0 dL/g, in a specific example 1.5 to 4.0 dL/g; and a number average molecular weight in the range of 5,000 to 50,000,000, for example 500,000 to 5,000,000.

Addition of one or more tackifying resins to the poly-α-olefin can improve tack, lower viscosity, improve coatability, improve peel adhesion, and enhance shear adhesion (with no concomitant loss of peel adhesion). Where a tackifying resin is used, it can be present in an amount from more than 0 to 150 parts by weight per 100 parts of polymer. Potentially useful tackifying resins include terpene resins and those derived from polymerization of C₅ to C₉ unsaturated hydrocarbon monomers. Examples of commercially available resins based on a C₅ olefin fraction of this type are those sold under the tradenames Wingtack 95 and Wingtack 115 tackifying resins (commercially available from Goodyear Tire and Rubber Co., Akron, Ohio); Regalrez 1078 and Regalrez 1126 (commercially available from Hercules Chemical Co. Inc. Wilmington, Del.); Arkon P115 (commercially available from Arakawa Forest Chemical Industries, Chicago, Ill.); and Escorez resins (commercially available from Exxon Chemical Co. Houston, Tex.). Suitable terpene resins include terpene polymers, such as polymeric resinous materials obtained by polymerization and/or copolymerization of terpene hydrocarbons such as the alicyclic, monocyclic, and bicyclic monoterpenes and their mixtures. Commercially available terpene resins include those sold under the tradename Zonarez B-series and 7000 series terpene resins (commercially available from Arizona Chemical Corp. Wayne, N.J.). The tackifying resin can contain ethylenic unsaturation; however, saturated tackifying resins are preferred for those applications where resistance to oxidation is important. This discussion of tackifiers is not intended to be comprehensive because they are not the subject of the present invention.

Minor amounts of additives also can be included in the polymer composition to provide adhesives for special end uses. Such additives can include pigments, dyes, plasticizers, fillers, stabilizers, UV radiation absorbers, antioxidants, processing oils, and the like. The amount of additive(s) used can vary from 0.1 to 50 weight percent, depending on the end use desired. Any additive(s) used generally do not significantly absorb radiation near the wavelength of maximum absorption of any photocrosslinker included in the polymer composition.

The pressure sensitive adhesive composition may also include a crosslinking agent that is activated by actinic radiation, typically after the pressure sensitive adhesive is coated. Suitable photocrosslinking agents include, but are not limited to, (a) aldehydes, such as benzaldehyde, chromophore-substituted acetaldehyde, and their substituted derivatives; (b) ketones, such as acetophenone, benzophenone, and their substituted derivatives; (c) quinones, such as the benzoquinones, anthraquinone, and their substituted derivatives; (d) thioxanthones, such as 2-isopropylthioxanthone and 2-dodecylthioxanthone; and (e) certain chromophore-substituted vinyl halomethyl-symtriazines, such as 2,4-bis(trichloromethyl)-6-4'-methoxyphenyl-s-triazine and 2,4-bis(trichloromethyl)-6-3',4'-dimethoxyphenyl-s-triazine. (Because many such triazines produce HCl upon activation, the addition of a basic compound to the polymeric composition can be beneficial.) Photoactive crosslinking agent can be present in a range from about 0.005 to about 2% (by wt.), for example from about 0.01 to about 0.5% (by wt.), and in specific examples from about 0.05 to 0.15% (by wt.), of the polymer.

### Primer

The primer layer comprises a thermoplastic elastomer that has been maleated, for example by grafting or copolymerization with maleic anhydride. The term "maleated" means that the thermoplastic elastomer is modified, for example with maleic acid or maleic anhydride, to contain an average of one or more carboxyl groups. The thermoplastic elastomer may be a block copolymer comprising one or more polystyrene blocks and the thermoplastic elastomer may be a rubber, such as a styrene-ethylene-butene-styrene (S-EB-S) type bock copolymer elastomer. Examples of suitable thermoplastic elastomers include those sold under the tradename KRATON, commercially available from Kraton Polymers, Inc., Houston, TX. A specific example of a maleated rubber suitable for the present invention is sold under the tradename KRATON FG 1901X, commercially available from Kraton Polymers, Inc., Houston, TX. Other examples of maleated thermoplastic elastomers include those sold under the tradenames FUSABOND MF-416D and FUSABOND MN-493D, commercially available from

### E.I. DuPont de Nemours Co., Wilmington, DE.

The primer additionally comprises a resin. The resin may be any resin with a glass transition temperature high enough to raise the glass transition temperature of the elastomer portions of the primer and to cause the primer to have a significantly increased overall glass transition temperature. Generally, the glass transition temperature of the resin is between about 0°C and about 100°C, for example between 25°C and 100°C. In specific examples, the glass transition temperature is between about 60°C and about 80°C. The resin may be, for example, hydrocarbon resin. Generally, useful resins have low molecular weights. An example of a resin suitable for the present invention are those sold under the tradename REGALREZ 1139, commercially available from Hercules Inc., Wilmington, DE.

The primer additionally comprises a polyolefin polymer. For example, the polymer may comprise a monomer such as a C₂ - C₃₀ α-olefin monomer, for example a C₃ - C₂₀ α-olefin, and in specific examples a C₆ - C₁₂ α-olefin. Such monomers optionally can be substituted with conventional substituents (i.e., those that do not interfere with the polymerization of these monomers or with the desired properties of the polymer produced therefrom). Generally, these polyolefins are non-halogenated. It is well known to add halogenated polyolefins to a primer. It was surprisingly found that a non-halogenated polyolefin excels in tape constructions of the present invention. Such an olefin can either be linear or branched (i.e., comprising one or more side chains). Common examples include 1-propene, 1-butene, 1-pentene, 1-hexene, 1-heptene, 1-octene, 1-nonene, 1-decene, 1-undecene, 1-dodecene, 1-hexadecene, 1-octadecene, 4-methyl-1-pentene and combinations thereof. Particular examples of α-olefin monomers include 1-hexene and 1-octene. Blends of one or more of these monomers plus a lower (i.e., C₂ -C₄) 1-alkene are also within the scope of the present invention. The polyolefin may also be a copolymer. A specific example of a suitable polyolefin is a polyhexene made as described in Example 4 of U.S. Patent No. 5,644,007 to Davidson, et al. and a polyoctene made as described in Example 3 of U.S. Patent No. 5,644,007 to Davidson. Additional examples include those commercial products sold under the trade names ENGAGE from DuPont Dow Elastomers L.L.C., Wilmington, DE, and ACHIEVE from Exxon Chemical Co., Houston, TX.

The primer may additionally comprise a crosslinking agent. Suitable crosslinkers include materials activated by ultraviolet light (photocured) or exposure to heat. The primer may then be cured using a source of actinic radiation of sufficient energy (i.e., wavelength range) to generate free radicals when incident upon the particular photoactive crosslinking agent selected for use in the composition. Generally, a useful wavelength range for the photoactive crosslinking agents disclosed above is 400 to 250 nm. The radiant energy in this range of wavelengths required to crosslink the adhesive film of the invention is about 100 to about 1500 millijoules/cm² and in specific embodiments, the radiant energy is about 200 to about 800 millijoules/cm². Examples of a photocure process are disclosed in U.S. Pat. Nos. 4,181,752 and 4,329,384.

Examples of suitable photocrosslinking agents for use in the compositions of the invention include, but are not limited to: aldehydes, such as benzaldehyde, acetaldehyde, and their substituted derivatives; ketones such as acetophenone, benzophenone and their substituted derivatives; quinones such as the benzoquinones, anthraquinone and their substituted derivatives; thioxanthones such as 2-isopropylthioxanthone and 2-dodecylthioxanthone; and certain chromophore-substituted vinyl halomethyl-symtriazines. In specific embodiments, the crosslinking agent is 2,4-bis(trichloromethyl)-6-4'-methoxyphenyl-sym-triazine. Such chromophore-substituted vinyl halomethyl-symtriazines may be prepared by the co-trimerization of an aryl nitrile with trichloroacetonitrile in the presence of HCl gas and a Lewis acid such as AlCl₃, AlBr₃, etc. [Bull. Chem. Soc. Japan, Vol. 42, page 2924 (1969)].

The primer additionally may comprise an epoxy. Epoxy resins useful in the primer compositions of the invention are any organic compounds having at least one oxirane ring. Epoxy resins are polymerizable by a ring opening reaction. Such materials, broadly called epoxides, include both monomeric and polymeric epoxides and can be aliphatic, alicyclic, heterocyclic, cycloaliphatic, or aromatic and can be combinations thereof. They can be liquid or solid or blends thereof. These materials generally have, on the average, at least two epoxy groups per molecule and are also called "polyepoxides." The polymeric epoxides include linear polymers having terminal epoxy groups (for example, a diglycidyl ether of a polyoxyalkylene glycol), polymers having skeletal oxirane units (for example, polybutadiene polyepoxide), and polymers having pendent epoxy groups (for example, a glycidyl methacrylate polymer or copolymer). The molecular weight of the epoxy resin may vary from about 74 to about 100,000 or more. Mixtures of various epoxy resins can also be used in the hot melt compositions of the invention. The "average" number of epoxy groups per molecule is defined as the number of epoxy groups in the epoxy resin divided by the total number of epoxy molecules present.

Useful epoxy resins include those which contain cyclohexene oxide groups such as the epoxycyclohexane carboxylates, typified by 3,4-epoxycyclohexylmethyl-3,4-epoxycyclohexane carboxylate, 3,4-epoxy-2-methylcyclohexylmethyl-3,4-epoxy-2-methylcyclohexane carboxylate, and bis(3,4-epoxy-6-methylcyclohexylmethyl) adipate. For a more detailed list of useful epoxides of this nature, reference may be made to U.S. Pat. No. 3,117,099.

Further epoxy resins which are useful in the present invention include glycidyl ether monomers such as the glycidyl ethers of polyhydric phenols obtained by reacting a polyhydric phenol with an excess of chlorohydrin such as epichlorohydrin, for example, the diglycidyl ether of 2,2-bis-(4-hydroxyphenyl)propane (Bisphenol A). Further examples of epoxides of this type are described in U.S. Pat. No. 3,018,262.

Many commercially available epoxy resins can be used in this invention. In particular, epoxides which are readily available include octadecylene oxide, epichlorohydrin, styrene oxide, vinylcyclohexene oxide, glycidyl methacrylate, diglycidyl ether of Bisphenol A, diglycidyl ether of Bisphenol F, vinylcyclohexene dioxide, 3,4-epoxycyclohexyl-methyl-3,4-epoxycyclohexene carboxylate (for example, having the trade designation "ERL-4221" from Union Carbide Corp.), 2-(3,4-epoxycyclohexyl-5,5-spiro-3,4-epoxy) cyclohexane-metadioxane, bis(3,4-epoxycyclohexyl) adipate, dipentene dioxide, epoxidized polybutadiene, epoxy silanes, for example, beta-3,4-epoxycyclohexylethyltrimethoxysilane and gamma-glycidoxypropyltrimethoxysilane, flame retardant epoxy resins, 1,4-butanediol diglycidyl ether, hydrogenated bisphenol A-epichlorohydrin based epoxy resins, and polyglycidyl ethers of phenol-formaldehyde novolaks.

The primer may additionally contain additives. Some primers include a multi-functional acrylate. For example, the primer may benefit from the inclusion of TMPTA (trimethylolpropane triacrylate) at moderate levels. The TMPTA may be added at about 1% to about 10% by weight based on the weight of the primer. TMPTA is especially beneficial for polyester tape backings.

The primer may also benefit from the addition of a fumed amorphous silica. This is especially beneficial when the primer is coated onto a backing and then rolled, so that the primer comes into contact with the unprimed surface of the backing. An example of a suitable fumed amorphous silica includes those sold under the tradename Aerosil OX50, commercially available from Degussa Corp., Ridgefield Park, NJ. Generally, the amount of silica added to the primer is dependent upon the coating conditions and the type of coater. In certain embodiments, the amount of silica is between 2 and 10% by weight, for example between about 3 and 8% based upon the solids of the primer coating solution. Too much silica yields a coating solution that is too viscous but a coating solution with too little silica yields a dry primer coating that may transfer to un-coated backing.

The primer of the present invention may also include fillers. Examples of fillers include, for example, nanoclay, flame retardants, plasticizers, tackifiers, fillers, colorants, ultraviolet light stabilizers, antioxidants, processing aids (urethanes, silicones, fluoropolymers, etc.), electrically or thermally conductive fillers, magnetic fillers, pigments, antistatic agents, lubricants, wetting agents, surfactants, dyes, coupling agents, suspending agents, stabilizers and combinations thereof.

### Making the Primer

The primer is made by mixing all components into a large volume holder and mechanically agitating the components until mixed. Generally, the maleated thermoplastic elastomer is added at about 1% to about 80 % by weight of the entire primer, for example between about 10% and about 50% by weight. The polyolefin is added at about 5% to about 80 % by weight, for example between about 30% and about 50% by weight. The tackifier is added at about 5% to about 60% by weight, for example between about 20% and about 40% by weight.

If a crosslinker is desired, the crosslinker is added to the other components in an amount between about 0.1% and about 3% by weight, for example between about 0.1% and about 1% by weight. If an epoxy is desired, the epoxy is added to the other components in an amount between about 0% and about 5% by weight, for example between about 1% and about 4% by weight.

The components are generally dissolved in a carrier solvent until the solution reaches about 10% solids. The mixture of components is then agitated by any mechanical means, for example a mechanical stirring device, at room temperature, or about 25°C. The temperature can be elevated to expedite blending, however, the temperature should not exceed the boiling point of the carrier solvent.

### Tape

The primer can be applied to a substrate (e.g., tape backing) through any of a variety of processes including solution coating, solution spraying, emulsion coating, gravure coating, or a number of other such processes known to those skilled in the art. The primer can be used to promote the adhesion to metal, metal oxides, metal hydroxide, polyesters, polyamides, polyurethanes, polyvinyl alcohol, poly(ethylene-co-vinyl alcohol), other polar polymers and other polymer surfaces containing hydroxyl or amino groups. Backings of interest include, but are not limited to, polyesters, polyolefins, papers, foils, poly(meth)acrylates, polyurethanes, perfluoropolymers, polycarbonates, ethylene vinyl acetates, and the like. Backings of vinyl films, woven and nonwoven sheets, woven and nonwoven fabrics, foam, papers, polymer coated papers and retroreflective sheeting may also be useful. In certain embodiments, the backings are films of polyolefins (e.g., polyethylene and propylene), especially corona-treated polyolefin films, polyethylene terephthalate and elastomer-saturated paper. In a specific embodiment, the backing is aluminum coated.

Useful coating weights of the primer range from about 0.1 to about 5 mg/cm². In some embodiments, the coating weight is from about 0.2 to about 1.0 mg/cm², and in specific embodiments the coating weight is from about 0.3 to about 0.5 mg/ cm². Once coated onto a backing, the primer layer may be dried. A drying step is generally performed at an elevated temperature, reduced pressure, or both. Generally, it is beneficial to crosslink the primer after the pressure sensitive adhesive has been coated.

In the tape construction of the present invention, a pressure sensitive adhesive, generally a poly-α-olefin pressure sensitive adhesive is coated onto the primed surface of the tape backing (i.e., substrate) prior to being crosslinked. The pressure sensitive adhesive may be coated by any suitable process, such as knife coating out of solution or extrusion coating from the melt of the adhesive. The primer is used to increase the bond of the pressure sensitive adhesive to the tape backing so as to permit clean removal from most surfaces. A primer's performance depends on various factors, for example the adherend, the temperature, the angle of peel and the rate of peel. Therefore, a careful balance must be found and even similar materials if compounded in different ratios may exhibit significantly different results depending on the exact conditions of the tests or applications.

The pressure sensitive adhesive and the primer are then crosslinked. Crosslinked means that a connection is formed within or between one or more polymer molecules wherein the connection is a covalent bond resulting from a chemical reaction. The tape article is exposed to source of activating radiation to crosslink the polymer components. In some embodiments, the tape article may be exposed to heat to crosslink the polymer components. To achieve crosslinking, the crosslinking agent in the primer and the pressure sensitive adhesive composition may be exposed to actinic radiation thereby generating free radicals which promote the crosslinking process. Commercially available actinic radiation sources include infrared, visible, and ultraviolet radiation. The use of UV radiation is explained in Hoyle and Kinstle, Radiation Curing of Polymeric Materials, (American Chemical Society, 1990).

Generally, the wavelength range to activate the radiation activatable crosslinking agents is about 250 nm to about 400 nm. The dose of radiant energy applied in this wavelength range is generally less than about 1500 millijoules/cm², for example less than about 800 millijoules/ cm². In specific embodiments, the dose of radiant energy required to crosslink the primer and the pressure sensitive adhesive is less than about 500 millijouls/ cm², for example about 300 millijoules/ cm². Details of a radiation crosslinking process are disclosed in U.S. Pat. Nos. 4,181,752 and 4,329,384.

Objects and advantages of this invention are further illustrated by the following examples. The particular materials and amounts thereof, as well as other conditions and details, recited in these examples should not be used to unduly limit this invention.

### Examples

**Table of Materials**

| Name | Material | Supplier |
|---|---|---|
| Acrylate | Terpolymer consisting of iso-octyl acrylate/ N-vinylcaprolactam/ acrylic acid | Prepared as described in Example 1 of U.S. Patent No. 5,677,376 to Groves. |
| Elastomer | Maleated S-EB-S copolymer | Commercially available as KRATON FG 1901X, from Kraton Polymers, Houston, TX. |
| Resin-1 | A hydrogenated hydrocarbon resin. | Commercially available as REGALREZ 1139, from Hercules, Inc., Wilmington, DE. |
| Resin-2 | A hydrogenated hydrocarbon resin. | Commercially available as REGALREZ 1126, from Hercules, Inc., Wilmington, DE. |
| Resin-3 | Saturated hydrocarbon Resin | Commercially available as ARKON P-115 from Arakawa Chemical Industries, Osaka, Japan. |
| Clay | An organophillic surface treated clay | Commercially available as CLOISITE 20A, from Southern Clay Products, Gonzalez, TX. |
| CP | Chlorinated Polyolefin | Commercially available as Chlorinated Polyolefin 343-3 (25% solids in Xylene), from Eastman Chemical Co., Kingsport, TN. |
| CH | Cyclohexane | Commercially available from Aldrich Chemical Co. (Milwaukee, WI). |
| P-6 | Polyhexene | Made as described in Example 4 of U.S. Patent No. 5,644,007 to Davidson, et al. having an inherent viscosity of 2.2dL/g. |
| P-8 | Poly-1-octene | Made as described Example 3 of U.S. Patent No. 5,644,007 to Davidson, et al. having an inherent viscosity of 2.5dL/g. |
| XL-1 | 2,4-bis(trichloromethyl)-6-4'-methoxyphenyl-sym-triazine | Made by the co-trimerization of an aryl nitrile with trichloroacetonitrile in the presence of HCl gas and a Lewis acid such as AlCl3, AlBr3, etc. [Bull. Chem. Soc. Japan. Vol. 42, page 2924 (1969)]. |
| XL-2 | t-butylanthraquinone | Commercially available from Aldrich Chemical Co., Milwaukee, WI. |
| XL-3 | Neutralized salt of 1,8-diazabicyclo[5.4.0]undec-7-ane | Commercially available as U-Cat CA-102 from Sun Apollo, Japan. |
| Eth | Anhydrous Ethanol | Commercially available from Aldrich Chemical Co. (Milwaukee, WI). |
| Epoxy-1 | Epoxy Resin | Obtained as ERL-4221 from Union Carbide Corp., Danbury, CT. |
| Epoxy-2 | Bisphenol A type epoxy resin | Commercially available from Yuka Shell, K.K. |
| Epoxy-3 | Bisphenol A /Epichlorohydrin based Epoxy Resin | Commercially available under the tradename EPON Resin 828, from Shell Oil Co., Houston, TX. |
| TMPTA | Trimethylolpropane triacrylate | Commercially available from Sartomer Co., Exton, PA |
| Irganox 1076 | A hindered phenol type antioxidant. Octadecyl 3,5-bis(1,1-dimethylethyl)-4-hydroxybenzene-propanoate | Commercially available under the tradename IRGANOX 1076 from CIBA-GEIGY Corp., Tarrytown, NY |
| Irganox B561 | A 4:1 blend of 4 parts tris(2,4-di-tert-butylphenyl)phosphite CAS No. [31570-04-4] to 1 part3,5- bis(1,1-Dimethylethyl)-4-hydroxybenzenepropanoic acid, 2,2-bis[[3-[3,5-bis(1,1-dimethylethyl)-4-hydroxyphenyl]-1-oxopropoxy]methyl] 1,3-propanediyl ester CAS No. [6683-19-8] | Commercially available under the tradename IRGANOX B561 from CIBA-GEIGY Corp., Tarrytown, NY |
| X | Xylene | Commercially available from Aldrich Chemical Co. (Milwaukee, WI). |
| Silane | beta-(3,4,-epoxycyclohexyl)ethyltrimethoxy silane | Commercially available under the tradename SILQUEST A-186 from Crompton Corp., South Charleston, WV. |
| TTE | Triethanolamine titanate | Commercially available under the tradename TYZOR TE from E.I. du Pont and de Nemours and Co., Wilmington, DE. |
| PSA-1 | poly-α-olefin pressure sensitive adhesive | Made as described in Synthesizing PSA-1. |
| PSA-2 | poly-α-olefin pressure sensitive adhesive | Made as described in Synthesizing PSA-2. |
| PSA-3 | poly-α-olefin pressure sensitive adhesive | Made as described in Synthesizing PSA-3. |
| PSA-4 | poly-α-olefin pressure sensitive adhesive | Made as described in Synthesizing PSA-4. |
| PSA-5 | poly-α-olefin pressure sensitive adhesive | Made as described in Synthesizing PSA-5. |

### Synthesizing PSA-1

The PSA-1 formulation included 81.875% (by weight) P-8, 18% (by weight) Resin-3, 0.125% (by weight) XL-1. The materials were mixed with a Brabender Plasti-corder (commercially available from C.W. Brabender Instruments, Inc., Hackensack, NJ) in an attached 400ml mixing bowl at 175°C for 10 minutes.

### Synthesizing PSA-2

PSA-2 was made as PSA-1 except using the following formulation: 84.8% P-6, 15% Resin-1, 0.2% XL-2.

### Synthesizing PSA-3

PSA-3 was made as PSA-1 except using the following formulation: 100 parts by weight P-8, 21.5 parts by weight Resin-2, 1.5 parts by weight Irganox 1076, 3.0 parts by weight Igranox B561, 0.3 parts by weight XL-1 and 7.2 parts by weight TMPTA.

### Synthesizing PSA-4

PSA-4 was made as PSA-1 except with the following formulation: 100 parts by weight P-8, 42.9 parts by weight Resin-2, 1.5 parts by weight Irganox 1076, 3.0 parts by weight Irganox B561, 0.3 parts by weight XL-1, and 7.2 parts by weight TMPTA.

### Synthesizing PSA-5

PSA-5 was made as PSA-1 except using the following formulation: 84.8% P-8, 15% Resin-2, 0.2% XL-1.

### Testing Methods

Shear is measured from stainless steel in minutes by ASTM D6463-99, with the exception that the tape sample measures 1 inch by 1 inch and weighs 1000 grams.

Adhesive Transfer was estimated by visual inspection of the shear panel and the tape and represents the percentage by area of adhesive that transferred from the backing to the shear panel.

Removal Force is measured from anodized aluminum. The test procedure is to apply a 0.5 inch wide sample of tape to an aluminum panel that has been anodized in chromic acid and left unsealed. The tape sample is removed by peeling from the aluminum panel at a peel angle of 90 degrees and at a peel rate of 12 inches per minute using any of the many common peeling devices such as an Instron. Two pieces of information are reported from this test the removal force to remove the 0.5 inch sample and the failure mode. There are three modes of failure: "adhesive", "cohesive" and "interfacial". "Adhesive" is the separation of the adhesive and the adherend at the adhesive adherend interface. "Cohesive" is failure in the bulk of the adhesive. "Interfacial" refers to failure at the interface between the adhesive and the backing. The failure mode is determined by visual and tactile inspection. If the tape is removed and there is a visible deposit of adhesive on the panel and it feels tacky and the tape backing looks and feels adhesive free then that is reported as interfacial failure. If the tape is removed and there is a visible deposit of adhesive on the panel and it feels tacky and the tape backing looks and feels tacky then the failure mode is cohesive. If the tape is removed and there is no visible deposit of adhesive on the panel and the tape backing looks and feels adhesive coated then the failure mode is adhesive.

### Primers 1-6

A series of primers were created using the formulations shown in Table 1. The components are listed in their weight percentage. The components were blended in the weight percentages shown in toluene to achieve a 10% solids solution until they were dissolved.

**Table 1**

| Primer | Elastomer | P-6 | P-8 | Resin-1 | Resin-3 | Epoxy | XL-1 | XL-2 |
|---|---|---|---|---|---|---|---|---|
| Primer 1 | 32.7 | 0 | 21.8 | 43.6 | 0 | 1.6 | 0 | 0.3 |
| Primer 2 | 32.7 | 0 | 21.8 | 0 | 43.6 | 1.6 | 0 | 0.3 |
| Primer 3 | 32.7 | 21.8 | 0 | 43.6 | 0 | 0 | 0 | 0.3 |
| Primer 4 | 32.7 | 21.8 | 0 | 43.6 | 0 | 1.6 | 0 | 0.3 |
| Primer 5 | 32.7 | 21.8 | 0 | 0 | 43.6 | 1.6 | 0 | 0.3 |
| Primer 6 | 20 | 44 | 0 | 34 | 0 | 1.6 | 0.3 | 0 |

### Examples 1-6 and Comparative Examples A and B

A series of tapes were formed by coating a primer solution as detailed in Table 2 on to C83490 SBR-saturated paper tape backings (Kimberly-Clark Co.; Roswell, Ga.). The primer coated papers were then dried at 160°F (71 °C) for 10 minutes and the primer was then coated with PSA-1. PSA-1 was coated using a Haake Rheocord (commercially available from Haake, Inc., Saddlebrook, NJ) with an attached 0.75 inch (1.9 cm) single screw extruder and a 5.25 inch (13.3 cm) extrusion die at a coating weight of 55 grams/m².

The PSA-1 coated papers were rolled up with a silicone liner. After 2 hours, the PSA-1 coated papers were cured under a nitrogen atmosphere with 300 mJ/cm² of energy as measured by a sensing device (commercially available under the tradename UVIMAP 365 from Electronic Instrumentation and Technology, Inc., Sterling, Va.) from medium pressure Hg lamps. (Calibration standard for UV energy was MIL-STD-45662A.)

**Table 2**

| Example | Primer |
|---|---|
| 1 | Primer 1 |
| 2 | Primer 2 |
| 3 | Primer 3 |
| 4 | Primer 4 |
| 5 | Primer 5 |
| 6 | Primer 6 |
| Comp. Ex. A | None |
| Comp. Ex. B | Primer as described in Example 2 of U.S. Patent No. 5,846,653, to Hawkins. |

Examples 1-6 and Comparative Examples A and B were tested according to the Failure Test Method as references above. The results are shown in Table 3.

**Table 3**

| Example | Shear (min) | Adhesive Transfer (%) | Removal Force oz/0.5inch | Failure Mode |
|---|---|---|---|---|
| 1 | 298.6 | 5 | 52 | Cohesive |
| 2 | 286 | 5 | 53 | Cohesive |
| 3 | 332.4 | 0 | 54 | Cohesive |
| 4 | 218.5 | 0 | 52 | Cohesive |
| 5 | 249.1 | 5 | 48 | Cohesive |
| 6 | 492.3 | 0 | 45 | Cohesive |
| Comp. Ex. A | 271.7 | 10 | 38 | Interfacial |
| Comp. Ex. B | 304.4 | 30 | 38 | Interfacial |

These results indicate that the primer of the invention maintains shear strength while increasing removal force and avoiding interfacial failure.

### Example 7 and Comparative Examples C and D

A series of primers were formulated as shown in Table 4, and made as described for Primers 1-6. The components are listed in their weight percentage.

**Table 4**

| Primer | Elastomer | P-6 | P-8 | Resin-1 | Epoxy-1 | Epoxy-2 | XL-1 | XL-3 |
|---|---|---|---|---|---|---|---|---|
| Primer 7 | 20 | 44 | 0 | 34 | 1.6 | | 0.3 | 0 |
| Primer C | 94.4 | 0 | 0 | 0 | 0 | 4.7 | 0 | 0.9 |
| Primer D | 94.4 | 0 | 0 | 0 | 0 | 4.7 | 0.9 | 0 |

Example 7 and Comparative Examples C -E were made as in Examples 1-6 with the Primer as detailed in Table 5. Comparative Example F was made as Example 7 with the exception that the primer was cured prior to the application of the adhesive.

**Table 5**

| Example | Primer |
|---|---|
| 7 | Primer 7 |
| Comp Ex. C | Primer C |
| Comp. Ex. D | Primer D |
| Comp. Ex. E | None |
| Comp Ex. F | Primer 7 |

Example 7 and Comparative Examples C -F were tested according to the Failure Test Method as references above. The results are shown in Table 6.

**Table 6**

| Example | Shear (min) | Adhesive Transfer (%) | Removal Force oz/0.5inch | Failure Mode |
|---|---|---|---|---|
| 7 | 492.3 | 0 | 45 | Cohesive |
| Comp. Ex. C | 513.2 | 60 | 33 | Interfacial |
| Comp. Ex. D | 402.2 | 60 | 27 | Interfacial |
| Comp. Ex. E | 501.9 | 50 | 30 | Interfacial |
| Comp. Ex. F | 442.8 | 50 | 27 | Interfacial |

These results indicate that the primer of the invention maintains shear strength while increasing removal force and avoiding interfacial failure. These results also indicate that the tapes of the invention benefit from curing the primer and the adhesive together.

### Examples 8 - 10 and Comparative Examples G - I

A series of primers were formulated as shown in Table 7, and made as described for Primers 1-6. The components are listed in their weight percentage.

**Table 7**

| Primer | Elastomer | P-6 | Resin-1 | Epoxy-1 | XL-1 |
|---|---|---|---|---|---|
| Primer 8 | 16.4 | 38.1 | 43.6 | 1.6 | 0.3 |
| Primer 9 | 27.2 | 27.2 | 43.6 | 1.6 | 0.3 |
| Primer 10 | 38.1 | 16.4 | 43.6 | 1.6 | 0.3 |
| Primer G | 0 | 54.5 | 43.6 | 1.6 | 0.3 |
| Primer H | 54.5 | 0 | 43.6 | 1.6 | 0.3 |

Examples 8-10 and Comparative Examples G and H were prepared by dissolving the primer as detailed in Table 8 in toluene at room temperature to prepare primer solution with 15% solids. The primer solution was coated with a knife coater on aluminum vapor coated polyethyleneterephthalate (commercially available from Courtaulds Performance Films, Martinsville, Virginia) backing and the dry thickness was controlled at 0.1 to 0.3 mil (2.5 - 7.6 micrometer). The primer coated polyethyleneterephthalate were then dried at 160°F (71°C) for 10 minutes.

The tape was made by coating hot-melt PSA-2 to the primed backing followed by UV crosslinking with a medium pressure mercury vapor lamp at about 500 milli joules dosage (commercially available from UVEXS Incorp., Sunnyvale, CA). The thickness of PSA is typically controlled at 2 mil (50.4 micrometer).

**Table 8**

| Example | Primer |
|---|---|
| 8 | Primer 8 |
| 9 | Primer 9 |
| 10 | Primer 10 |
| Comp. Ex. G | Primer G |
| Comp. Ex. H | Primer H |
| Comp. Ex. I | None |

The resulting tapes were tested according to the Failure Test Method as references above. The results are shown in Table 9.

**Table 9**

| Example | Removal Force oz/0.5inch | Failure | Removal Force oz/0.5inch (after humidity aging and 70% Relative Humidity and at 80 °C) | Failure (after humidity aging) |
|---|---|---|---|---|
| 8 | 50.2 | Cohesive | 51.0 | Adhesive |
| 9 | 54.8 | Cohesive | 50.8 | Adhesive |
| 10 | 56.8 | Cohesive | 52.0 | Adhesive |
| Comp. Ex. G | 30.6 | Interfacial | 31.3 | Interfacial |
| Comp. Ex. H | 48.0 | Interfacial | 46.8 | Interfacial |
| Comp. Ex. I | 18.6 | Interfacial | 17.7 | Interfacial |

These results indicate that the addition of the Elastomer to the primer composition improves the adhesion to the film backing. Additionally, the addition of a polyhexene component enhances the bonding of the primer to PSA-2.

### Examples 11 - 15 and Comparative Examples J and K

A series of primers were formulated as shown in Table 10, and made as described for Primers 1-6. The components are listed in their weight percentage.

**Table 10**

| Primer | Elastomer | P-6 | Resin-1 | Epoxy-1 | XL-1 |
|---|---|---|---|---|---|
| Primer J | 57.9 | 38.6 | 0 | 2.9 | 0.6 |
| Primer 11 | 48.5 | 32.4 | 16.2 | 2.4 | 0.5 |
| Primer 12 | 41.8 | 27.9 | 27.9 | 2.1 | 0.4 |
| Primer 13 | 36.7 | 24.4 | 36.7 | 1.8 | 0.4 |
| Primer 14 | 32.7 | 21.8 | 43.6 | 1.6 | 0.3 |
| Primer 15 | 29.5 | 19.6 | 49.1 | 1.5 | 0.3 |

Examples 11-13 and Comparative Examples J-K were prepared as examples 8-10 and Comparative Examples G and H using the primer as detailed in Table 11.

**Table 11**

| Example | Primer |
|---|---|
| 11 | Primer 11 |
| 12 | Primer 12 |
| 13 | Primer 13 |
| 14 | Primer 14 |
| 15 | Primer 15 |
| Comp. Ex. J | Primer J |
| Comp. Ex. K | None |

The resulting tapes were tested according to the Failure Test Method as references above. The results are shown in Table 12.

**Table 12**

| Example | Removal Force oz/0.5inch | Failure |
|---|---|---|
| 11 | 49.6 | Mixed Cohesive and Interfacial |
| 12 | 61.3 | Cohesive |
| 13 | 60.1 | Cohesive |
| 14 | 67.87 | Cohesive |
| 15 | 51.8 | Mixed Cohesive and Interfacial |
| Comp. Ex. J | 42.0 | Interfacial |
| Comp. Ex. K | 18.6 | Interfacial |

These results indicate that the loading of the resin has an effect on the performance of primer.

### Examples 16-19

Primer 16 was formulated as shown in Table 13 with all amounts shown in percent by weight. The formulation was dissolved in toluene to achieve a primer solution with 15% solids.

**Table 13**

| Primer | Elastomer | P-6 | Resin-1 | Epoxy-1 | XL-1 |
|---|---|---|---|---|---|
| Primer 16 | 32.7 | 21.8 | 43.6 | 1.6 | 0.3 |

Primer 16 was blended with a fumed amorphous silica (commercially available as Aerosil OX50 from Degussa Corp., Ridgefield Park, NJ), dispersed in toluene to 10% solids, in the amounts shown in Table 14.

**Table 14**

| Primer | Primer 16 in toluene | Silica in toluene |
|---|---|---|
| Primer 17 | 1000g | 1.5g |
| Primer 18 | 1000g | 3.0g |
| Primer 19 | 1000g | 4.5g |

Examples 16-19 were prepared by coating the primer with a knife coater as detailed in Table 15 on aluminum vapor coated polyethyleneterephthalate (commercially available from Courtaulds Performance Films, Martinsville, Virginia) backing and the dry thickness was controlled at 0.1 to 0.3 mil (2.5 - 7.6 micrometer). The primer coated polyethyleneterephthalate films were then dried at 160°F (71 °C) for 10 minutes.

**Table 15**

| Example | Primer |
|---|---|
| Example 16 | Primer 16 |
| Example 17 | Primer 17 |
| Example 18 | Primer 18 |
| Example 19 | Primer 19 |

The tapes of Example 16 - 19 were tested by rolling the primed backing so that the primed surface was in contact with an un-primed surface. The wound roll of primed backing was then unwound. Blocking occurs when the primer transfers to the un-primed surface of the backing upon unwind. The amount of blocking was observed visually and is detailed in Table 16. "Severe" blocking was observed when more than 30% of the primer appeared to have transferred to the unprimed surface.

**Table 16**

| Example | Blocking |
|---|---|
| Example 16 | Severe |
| Example 17 | Less than 5% |
| Example 18 | No Blocking |
| Example 19 | No Blocking |

### Examples 20-23 and Comparative Examples L and M

A series of primers were formulated as shown in Table 17, and made as described for Primers 1-6. The components are listed in their weight percentage.

**Table 17**

| Primer | Elastomer | XL-2 | P-6 | Resin-1 | Epoxy-1 | Modifier |
|---|---|---|---|---|---|---|
| 20 | 32.7 | 0.3 | 21.8 | 43.6 | 1.6 | None |
| 21 | 32.5 | 0.3 | 21.7 | 43.3 | 1.6 | TMPTA 0.5 |
| 22 | 31.6 | 0.3 | 21.1 | 42.2 | 1.6 | Clay 3.2 |

The primers evaluated were coated out of solvent using a ground glass rod with a 223g weight on either end to spread the solution evenly on a 0.002 inch thick polyester film (commercially available under the tradename SCOTCH PAR P-0862197 Polyester Film from 3M Company, Saint Paul, MN) using the primer as detailed in Table 18. These coated films were then dried in a 250°F oven for 5 minutes. The primed films were then adhesive coated with the pressure sensitive adhesive formulation as shown in Table 18. The pressure sensitive adhesive was extruded onto the primed backing to form a tape. The tapes were rolled up with a silicone liner (commercially available under the tradename SCW 106 NP from 3M Company) before exposure to UV radiation. The silicone release liner was removed and the tape was cured under a nitrogen atmosphere with 300 mJ/cm² of energy as measured by a UVIMAP^{™} 365 sensing device (Electronic Instrumentation and Technology, Inc., Sterling, VA) from medium pressure mercury lamps.

**Table 18**

| Example | Primer | Pressure Sensitive Adhesive |
|---|---|---|
| Example 20 | Primer 20 | PSA-3 |
| Example 21 | Primer 21 | PSA-3 |
| Example 22 | Primer 22 | PSA-3 |
| Example 23 | Primer 20 | PSA-4 |
| Example 24 | Primer 21 | PSA-4 |
| Example 25 | Primer 22 | PSA-4 |
| Comp. Ex. L | None | PSA-3 |
| Comp. Ex. M | None | PSA-4 |

The tapes were tested by adhering these onto annodized aluminum panels. The tapes were then peeled by hand at 180° and 90° angles and the failure mode noted as adhesive, cohesive, or interfacial as defined above. In the event that there was interfacial failure on as little as 5% of the tape the failure was still designated as interfacial. The results are shown in Table 19.

**Table 19**

| Example | 180 degree | 90 degree |
|---|---|---|
| Example 20 | Cohesive | Cohesive |
| Example 21 | Cohesive | Cohesive |
| Example 22 | Cohesive | Cohesive |
| Example 23 | Cohesive | Interfacial |
| Example 24 | Cohesive | Cohesive |
| Example 25 | Cohesive | Cohesive |
| Comp. Ex. L | Cohesive | Interfacial |
| Comp. Ex. M | Interfacial | Cohesive |

### Comparative Example N

Primer N was formulated as shown in Table 20 with all amounts shown in percent by weight. The formulation was dissolved in toluene to achieve a primer solution with 15% solids.

**Table 20**

| Primer | Elastomer | CH | Eth | CP | E3 | X | AI | Silane | TTE |
|---|---|---|---|---|---|---|---|---|---|
| Primer N | 0.66 | 47.97 | 8.74 | 5.3 | 0.44 | 30.6 | 5.55 | 0.44 | 0.3 |

Comparative Example N was prepared by dissolving the primer as detailed in Table 20 in toluene at room temperature to prepare primer solution with 15% of solid. The primer solution was coated with a knife coater on aluminum vapor coated polyethyleneterephthalate (commercially available from Courtaulds Performance Films, Martinsville, Virginia) backing and the dry thickness was controlled at 0.1 to 0.3 mil (2.5 - 7.6 micrometer). The primer coated papers were then dried at 160°F (71°C) for 10 minutes.

The tape was made by coating hot-melt PSA-5 to the primed backing followed by UV crosslinking with a medium pressure mercury vapor lamp at about 500 milli joules dosage (commercially available from UVEXS Incorp., Sunnyvale, CA). The thickness of PSA is typically controlled at 2 mil (50.4 micrometer).

The resulting tape was tested for 90 degree peel at 12 inches/minute from stainless steel. The tape was tested both at 1 minute dwell and after 3 days at 70 °C. For both time intervals, the tape failed with 100% interfacial failure.

## Claims

1. A primer comprising:
(a) a maleated thermoplastic elastomer;
(b) a non-halogenated polyolefin; and
(c) a resin that raises the glass transition temperature of the elastomer portions of the primer.

2. The primer of claim 1 comprising a crosslinking agent.

3. The primer of claim 2 wherein the crosslinking agent is 2,4-bis(trichloromethyl)-6-4'-methoxyphenyl-sym-triazine.

4. The primer of any of claims 1 to 3 comprising an epoxy.

5. The primer of any of claims 1 to 4 wherein the maleated thermoplastic elastomer is a maleated rubber.

6. The primer of claim 5 wherein the rubber is a block copolymer wherein the block copolymer is a styrene-block-ethylene-co-butene-block-styrene-block copolymer.

7. The primer of any of claims 1 to 6 wherein the resin is a hydrogenated hydrocarbon resin.

8. The primer of any of claims 1 to 7 comprising fumed amorphous silica.

9. The primer of any of claims 1 to 8 comprising trimethylolpropane triacrylate.

10. A tape comprising:
(a) a substrate;
(b) a primer according to any of claims 1 to 9 coated on at least one surface of the substrate; and
(c) a pressure sensitive adhesive coated on the primer.

11. The tape of claim 10 wherein the substrate comprises a material selected from polyesters, polyolefins, papers, foils, polyacrylates, polyurethanes, perfluoropolymers, polycarbonates, ethylene vinyl acetates, vinyl, fabrics, foam, polymer coated papers, retroreflective sheeting and combinations thereof.

## Patentansprüche

1. Primer umfassend:
(a) ein maleiertes thermoplastisches Elastomer;
(b) ein nichthalogeniertes Polyolefin; und
(c) ein Harz, das die Glasübergangstemperatur der Elastomeranteile des Primers erhöht.

2. Primer nach Anspruch 1, umfassend ein Vernetzungsmittel.

3. Primer nach Anspruch 2, wobei das Vernetzungsmittel 2,4-Bis(trichlormethyl)-6-4'-methoxyphenyl-sym-triazin ist.

4. Primer nach einem der Ansprüche 1 bis 3, umfassend ein Epoxid.

5. Primer nach einem der Ansprüche 1 bis 4, wobei das maleierte thermoplastische Elastomer ein maleierter Kautschuk ist.

6. Primer nach Anspruch 5, wobei der Kautschuk ein Blockcopolymer ist, wobei das Blockcopolymer ein Styrolblock-Ethylencobutenblock-Styrolblock-Copolymer ist.

7. Primer nach einem der Ansprüche 1 bis 6, wobei das Harz ein hydriertes Kohlenwasserstoffharz ist.

8. Primer nach einem der Ansprüche 1 bis 7, umfassend pyrogenes amorphes Siliciumdioxid.

9. Primer nach einem der Ansprüche 1 bis 8, umfassend Trimethylolpropantriacrylat.

10. Band umfassend:
(a) ein Substrat;
(b) einen Primer nach einem der Ansprüche 1 bis 9, der schichtförmig auf mindestens eine Oberfläche des Substrats aufgebracht ist; und
(c) einen auf den Primer schichtförmig aufgebrachten Haftklebstoff.

11. Band nach Anspruch 10, wobei das Substrat ein Material umfasst, das aus Polyestern, Polyolefinen, Papieren, Folien, Polyacrylaten, Polyurethanen, Perfluorpolymeren, Polycarbonaten, Ethylenvinylacetaten, Vinyl, Textilien, Schaumstoff, mit Polymer beschichteten Papieren, retroreflektivem Bahnmaterial und Kombinationen derselben ausgewählt ist.

## Revendications

1. Apprêt comprenant :
(a) un élastomère thermoplastique maléaté ;
(b) une polyoléfine non halogénée ; et
(c) une résine qui élève la température de transition vitreuse des parties élastomères de l'apprêt.

2. Apprêt selon la revendication 1, comprenant un agent de réticulation.

3. Apprêt selon la revendication 2, dans lequel l'agent de réticulation est la 2,4-bis(trichlorométhyl)-6-4'-méthoxyphényl-symtriazine.

4. Apprêt selon l'une quelconque des revendications 1 à 3, comprenant un époxyde.

5. Apprêt selon l'une quelconque des revendications 1 à 4, dans lequel l'élastomère thermoplastique maléaté est un caoutchouc maléaté.

6. Apprêt selon la revendication 5, dans lequel le caoutchouc est un copolymère à blocs, dans lequel le copolymère à blocs est un copolymère à blocs ayant la structure styrène-bloc-éthylène-co-butène-bloc-styrène.

7. Apprêt selon l'une quelconque des revendications 1 à 6, dans lequel la résine est une résine hydrocarbure hydrogénée.

8. Apprêt selon l'une quelconque des revendications 1 à 7, comprenant de la silice amorphe pyrogénée.

9. Apprêt selon l'une quelconque des revendications 1 à 8, comprenant du triacrylate de triméthylolpropane.

10. Ruban comprenant :
(a) un substrat ;
(b) un apprêt selon l'une quelconque des revendications 1 à 9, appliqué sur au moins une surface du substrat ; et
(c) un adhésif sensible à la pression appliqué sur l'apprêt.

11. Ruban selon la revendication 10, dans lequel le substrat comprend un matériau sélectionné parmi les polyesters, les polyoléfines, les papiers, les feuilles, les polyacrylates, les polyuréthanes, les perfluoropolymères, les polycarbonates, les composés d'éthylène-acétate de vinyle, le vinyle, les tissus, la mousse, les papiers revêtus de polymères, les feuilles rétroréfléchissantes, et des combinaisons de ceux-ci.
